(19) Europäisches Patentamt
European Patent Office
Office européen des brevets

(11) **EP 4 379 996 B1**

(12) **EUROPEAN PATENT SPECIFICATION**

(45) Date of publication and mention
of the grant of the patent:
**18.02.2026 Bulletin 2026/08**

(21) Application number: **22901549.0**

(22) Date of filing: **07.10.2022**

(51) International Patent Classification (IPC):
*H02J 7/00* (2026.01)   *H01M 10/42* (2006.01)

(52) Cooperative Patent Classification (CPC):
**H01M 10/42; H02J 7/54; H02J 7/80;**
H01M 2010/4271

(86) International application number:
**PCT/KR2022/015106**

(87) International publication number:
**WO 2023/101189 (08.06.2023 Gazette 2023/23)**

(54) **CELL BALANCING METHOD AND BATTERY SYSTEM WITH CELL BALANCING**

ZELLENAUSGLEICHSVERFAHREN UND BATTERIESYSTEM MIT ZELLENAUSGLEICH

PROCÉDÉ D'ÉQUILIBRAGE DE CELLULES ET SYSTÈME DE BATTERIE AVEC ÉQUILIBRAGE DE CELLULES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.12.2021 KR 20210171884**

(43) Date of publication of application:
**05.06.2024 Bulletin 2024/23**

(73) Proprietor: **LG Energy Solution, Ltd.
Seoul 07335 (KR)**

(72) Inventor: **SHIN, Hyeonju
Daejeon 34122 (KR)**

(74) Representative: **Plasseraud IP
104 Rue de Richelieu
CS92104
75080 Paris Cedex 02 (FR)**

(56) References cited:
WO-A1-2019/042410    WO-A1-2021/192382
JP-A- 2011 019 329    JP-A- 2021 129 488
KR-A- 20200 086 960   KR-A- 20200 135 046
US-A1- 2020 235 588

# Description

## [Technical Field]

Cross-reference to related application(s)

This application claims priority to and the benefit of Korean Patent Application No. 10-2021-0171884 filed in the Korean Intellectual Property Office on December 3, 2021.

The present invention relates to a cell balancing method for performing customized cell-balancing according to a cell state of charge, SOC, and a battery system providing the same.

## [Background Art]

An electric vehicle, EV, and a hybrid vehicle, HV, use a battery pack as an energy supply source for driving a motor. In this case, the battery pack may include a plurality of battery cells connected in series and/or in parallel.

When the battery pack is used for a long period of time, aging and internal resistance values of each of the plurality of battery cells may vary, and cell deviation may occur among the plurality of battery cells. In this case, the cell deviation may indicate a deviation in a cell state of charge, SOC, and a deviation in a cell voltage. As the cell deviation increases, overcharging or overdischarging may occur so that there is a problem in which a capacity of an entire battery pack is reduced and lifespan of the battery pack is shortened.

To solve this problem, a battery system performs cell balancing to reduce the cell deviation. The battery system may calculate a cell balancing current value based on an open circuit voltage, OCV, value, and may perform the cell balancing for a balancing time calculated based on the cell balancing current value.

On the other hand, a change width of the cell voltage may be different according to the cell state of charge, SOC. For example, in a case of a battery cell having a very small cell SOC or a very large cell SOC, a change in a cell voltage value according to a change in the cell SOC may be large. That is, in a process of performing the cell balancing, a cell voltage of the battery cell having the large (or small) cell SOC may be significantly lowered and a balancing current value of the battery cell having the large (or small) cell SOC may also be lowered. Then, the battery cell having the large (or small) cell SOC may not perform sufficient cell balancing for a preset balancing time.

WO 2019/042410 A1 is a prior art document disclosing the preambles of claims 1 and 5.

## [Disclosure]

## [Technical Problem]

The present invention is to provide a cell balancing method and a battery system providing the method that reduce cell deviation by performing optimal cell balancing according to a cell state of charge, SOC, of a battery cell.

## [Technical Solution]

A battery system according to one aspect of the present invention includes: a battery including a plurality of battery cells; a cell monitoring integrated circuit, IC, configured to measure a cell voltage of each of the plurality of battery cells; a current sensor configured to measure a battery current flowing in the battery; and a main control circuit configured to: estimate a cell state of charge, SOC, of each of the plurality of battery cells based on the cell voltage and the battery current, extract a minimum cell SOC among cell SOCs of the plurality of battery cells, determine a balancing reference value corresponding to the minimum cell SOC, determine a need for cell balancing for each of the plurality of battery cells based on the balancing reference value, classify an entire section of the cell SOC into a plurality of SOC sections according to a predetermined criterion, set a section reference value, which is a start condition of the cell balancing of each of the plurality of SOC sections, according to a predetermined criterion, select an SOC section to which the minimum cell SOC belongs among the plurality of SOC sections, and determine the section reference value corresponding to the selected SOC section as the balancing reference value, wherein said main control circuit is further configured to: classify the entire section of the cell SOC into the plurality of SOC sections based on a point at which a ratio of the cell voltage to the cell SOC is changed, and to set the section reference value based on said ratio.

The main control circuit may be further configured to calculate a difference value between the cell SOC of each of the plurality of battery cells and the minimum cell SOC, and to determine that the cell balancing is required for the battery cell, when the difference value exceeds the balancing reference value.

The battery system may further include a cell balancing circuit that includes a plurality of switches and a plurality of resistors, the cell balancing circuit being configured to perform the cell balancing of the battery cell by controlling a switching operation according to a switching signal among at least one switching signal supplied from the cell monitoring IC. The cell monitoring IC may be configured to discharge the battery cell determined as a cell balancing target among the plurality of battery cells through the cell balancing circuit according to a cell balancing control signal transmitted from the main control circuit.

The main control circuit may be further configured to calculate a balancing time based on a cell SOC of the battery cell determined as the cell balancing target, to calculate a difference value between the cell SOC of the battery cell and the minimum cell SOC, and to calculate a value of a cell voltage of the battery cell, and may be configured to transmit the cell balancing control signal including information on the balancing time to the cell monitoring IC.

A cell balancing method according to another aspect of the present invention comprising: determining a balancing reference value based on a minimum cell state of charge, SOC, among cell SOCs of a plurality of battery cells; calculating a difference value between the cell SOC of each of the plurality of battery cells and the minimum cell SOC and comparing the difference value with the balancing reference value to determine a need for cell balancing for each of the plurality of battery cells; performing the cell balancing on a battery cell determined as a cell balancing target when the cell balancing is required for the battery cell, wherein the determining of the balancing reference value comprises: estimating the cell SOC of each of the plurality of battery cells based on a cell voltage of each of the plurality of battery cells and a battery current; extracting the minimum cell SOC among the cell SOCs of the plurality of battery cells; selecting an SOC section to which the minimum cell SOC belongs among a plurality of SOC sections configured by classifying an entire section of the cell SOC according to a predetermined criterion; determining a section reference value corresponding to the selected SOC section as the balancing reference value, and wherein said plurality of SOC sections are configured by classifying the entire section of the cell SOC based on a point at which a ratio of the cell voltage to the cell SOC is changed, and the section reference value is set based on the ratio of the cell voltage to the cell SOC corresponding to the plurality of SOC sections.

The performing of the cell balancing may comprise: calculating a balancing time based on a cell SOC of the battery cell determined as the cell balancing target, calculating a difference value between the cell SOC of the battery cell and the minimum cell SOC, calculating a value of a cell voltage of the battery cell, and performing the cell balancing of the battery cell during the balancing time.

The determining of the need for the cell balancing may comprise determining the battery cell whose difference value exceeds the balancing reference value as the cell balancing target.

**[Advantageous Effects]**

The present invention may determine a need for cell balancing according to a reference value corresponding to a cell charge of charge, SOC, to increase accuracy of the cell balancing.

**[Description of the Drawings]**

FIG. 1 is a view illustrating a battery system for providing a cell balancing method according to an embodiment.
FIG. 2 is an example diagram of a graph for explaining a reference value determined corresponding to a cell state of charge, SOC, according to an embodiment.
FIG. 3 is a flowchart illustrating part of the steps of a cell balancing method according to an embodiment.
FIG. 4 is a flowchart for describing in detail a step of determining a balancing reference value of FIG. 3.

**[Mode for Invention]**

Hereinafter, embodiments disclosed in the present specification will be described in detail with reference to the accompanying drawings, and in the present specification, the same or similar constituent elements will be denoted by the same or similar reference numerals, and a redundant description thereof will be omitted. The terms "module" and/or "unit, portion, or part" representing constituent element used in the following description are used only in order to make understanding of the specification easier, and thus, these terms do not have meanings or roles that distinguish them from each other by themselves. In addition, in describing embodiments of the present specification, when it is determined that a detailed description of the well-known art associated with the present invention may obscure the gist of the present invention, it will be omitted. Further, the accompanying drawings are provided only in order to allow embodiments disclosed in the present specification to be easily understood and are not to be interpreted as limiting the present specification, and it is to be understood that the present invention includes all modifications without departing from the scope of the present invention, which is defined by the independent claims.

Terms including ordinal numbers such as first, second, and the like will be used only to describe various constituent elements, and are not to be interpreted as limiting these constituent elements. The terms are only used to differentiate one constituent element from other constituent elements.

It is to be understood that when one constituent element is referred to as being "connected" or "coupled" to another constituent element, it may be connected or coupled directly to the other constituent element or may be connected or coupled to the other constituent element with a further constituent element intervening therebetween. In contrast, it should be understood that, when it is described that an element is "directly coupled" or "directly connected" to another element, no element is present between the element and the other element.

In the present application, it should be understood that the term "include", "comprise", "have", or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance.

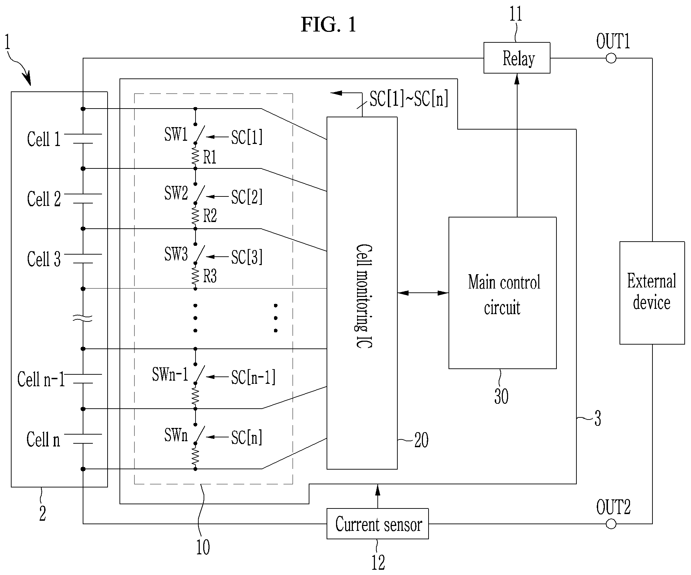

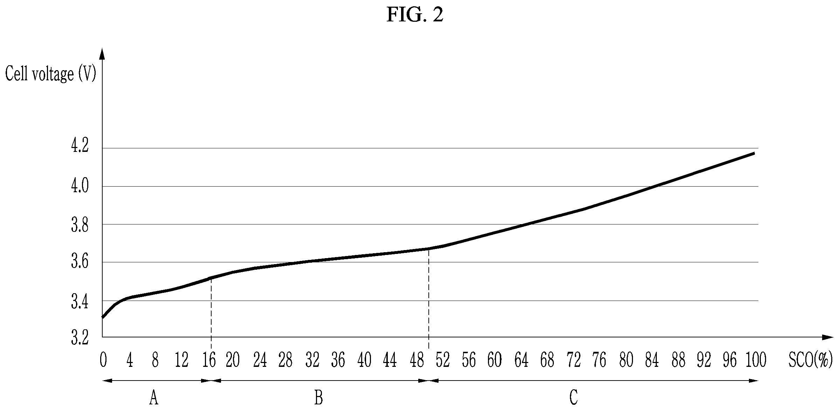

FIG. 1 is a view illustrating a battery system providing a cell balancing method according to an embodiment, and FIG. 2 is an example diagram of a graph for explaining a reference value determined corresponding to a cell state of charge, SOC, according to an embodiment.

As shown in FIG. 1, the battery system 1 includes a battery 2, a BMS (a battery management system) 3, a relay 11, and a current sensor 12.

The battery 2 may include a plurality of battery cells connected in series/parallel to supply necessary power to an external device. In FIG. 1, the battery 2 includes a plurality of battery cells Cell1-Celln connected in series, and is connected between two output terminals OUT1 and OUT2 of the battery system 1. In addition, the relay 11 is connected between a positive electrode of the battery system 1 and the output terminal OUT1, and a current sensor 12 is connected between a negative electrode of the battery system 1 and the output terminal OUT2. Configurations shown in FIG. 1 and a connection relationship between the configurations are embodiments, but the present invention is not limited thereto.

The relay 11 controls electrical connection between the battery system 1 and the external device. When the relay 11 is turned on, the battery system 1 and the external device are electrically connected so that charging or discharging is performed. When the relay 11 is turned off, the battery system 1 and the external device are electrically separated. The external device may be a load or a charger.

The current sensor 12 is connected in series to a current path between the battery 2 and the external device. The current sensor 12 measures a current (that is, a charging current and a discharging current) flowing in the battery 2, and may transmit the measurement result to the BMS 3.

The BMS 3 includes a cell balancing circuit 10, a cell monitoring IC (or a cell monitoring integrated circuit) 20, and a main control circuit 30.

The cell balancing circuit 10 includes a plurality of switches SW1-SWn and a plurality of resistors R1-Rn. Each of the plurality of switches SW1-SWn performs a switching operation according to a corresponding switching signal among a plurality of switching signals SC[1]-SC[n] supplied from the cell monitoring IC 20. For each of the plurality of battery cells Cell1-Celln, a corresponding switch SWi and a corresponding resistor Ri are connected in series between a positive electrode and a negative electrode of a corresponding cell Celli. When the switch SWi is turned on, a discharging path is formed between the corresponding cell Celli, the switch SWi, and the resistor Ri, and the corresponding cell Celli discharges. In this case, i is one of natural numbers from 1 to n.

The cell monitoring IC 20 is electrically connected to a positive electrode and a negative electrode of each of the plurality of battery cells Cell1-Celln to measure a cell voltage of each of the plurality of battery cells. A value of a current (hereinafter referred to as a battery current) measured by the current sensor 12 may be transmitted to the cell monitoring IC 20. The cell monitoring IC 20 transfers information on the measured cell voltage and battery current to the main control circuit 30. Specifically, the cell monitoring IC 20 measures the cell voltage of each of the plurality of battery cells Cell1-Celln every predetermined period during a rest period in which charging and discharging does not occur, and transfers the measured result to the main control circuit 30.

The cell monitoring IC 20 may discharge a cell to be balanced among the plurality of battery cells Cell1-Celln through the cell balancing circuit 10 according to a cell balancing control signal transmitted from the main control circuit 30. For example, the cell monitoring IC 20 may generate the plurality of switching signals SC[1]-SC[n] according to the cell balancing control signal of the main control circuit 30. Each of the switching signals SC[1]-SC[n] may control a switching operation of the corresponding switch SWi. When an on-level switching signal SC[i] is supplied to the corresponding switch SWi, the switch SWi is turned on so that the corresponding cell Celli is discharged.

The main control circuit 30 determines a balancing reference value based on a minimum cell state of charge (min SOC) among the cell state of charge Csoc of each of the plurality of battery cells Cell1-Celln. In this case, the balancing reference value may be a reference value for determining a target of cell balancing among the plurality of battery cells Cell1-Celln.

The main control circuit 30 classifies an entire section of the cell SOC (Csoc) into a plurality of SOC sections according to a predetermined criterion, and sets a section reference value, which is a start condition for cell balancing of each of the plurality of SOC sections, according to a predetermined criterion. In addition, the main control circuit 30 selects a SOC section to which the minimum cell state of charge min SOC belongs among the plurality of SOC sections, and determines the section reference value corresponding to the selected SOC section as the balancing reference value.

Referring to FIG. 2, the main control circuit 30 may divide the entire section of the cell SOC from 0 % to 100 % into a plurality of SOC sections A, B, and C according to a predetermined criterion. For example, in FIG. 2, the main control circuit 30 may divide the entire cell section of the cell SOC (0 % to 100 %) into a first SOC section (0 % or more and less than 16 %), a second SOC section (16 % or more and less than 51 %), and a third SOC section (51 % or more and 100 % or less) according to a slope value of a SOC-voltage correlation graph (hereinafter referred to as S-VCG). The S-VCG is a graph in which a cell voltage value corresponding to the cell SOC Csoc is shown.

According to an embodiment, the main control circuit 30 may divide the entire section of the cell SOC into the plurality of SOC sections A, B, and C based on a point at which a ratio of the cell voltage to the cell SOC (Csoc) is changed. The point at which the ratio of the cell voltage to the cell SOC (Csoc) is changed may be a point at which the slope value is changed in the S-VCG.

In FIG. 2, a slope of the graph is changed based on a value of the cell SOC (Csoc) of about 16 %, and the slope of the graph is changed again based on about 51 %. Specifically, in the first SOC section (0 % or more and less than 16 %) and the third SOC section (51 % or more and 100 % or less), a cell voltage change amount (i.e., the slope of the graph) is large, and when the second SOC section (16 % or more and less than 51 %) is compared with the first SOC section and the third SOC section, the cell voltage change amount (i.e., the slope of the graph) is small in the second SOC section.

The section reference value is the start condition (or a reference value) for performing the cell balancing. That is, the section reference value is a condition for determining whether the cell balancing of the battery cell is required in each of the plurality of SOC sections. The balancing reference value is the section reference value corresponding to a selected SOC section among the plurality of SOC sections.

For example, in FIG. 2, the section reference value of each of the first SOC section A and the third SOC section C may be 1.5 %, and the section reference value of the second SOC section B may be 3 %. In addition, when the second SOC section B is selected according to a method to be described below, the section reference value (3 %) of the second SOC section B may be determined as the balancing reference value.

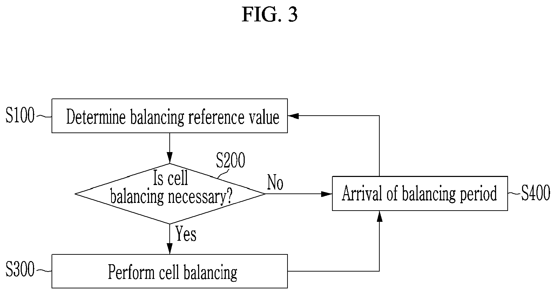

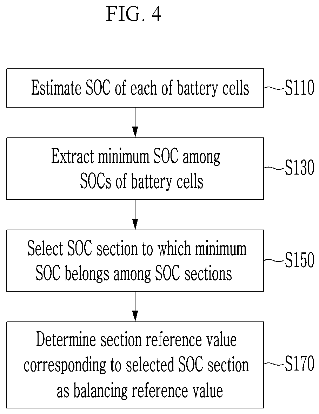

The main control circuit 30 may determine a need for cell balancing for each of the plurality of battery cells Cell1-Celln according to the method to be described below, and if at least one battery cell (hereinafter referred to as a cell balancing target) requiring the cell balancing exists as a result of the determination, the cell balancing may be performed. A more detailed description will be described in detail with FIGS. 3 and 4 below.

FIG. 3 is a flowchart illustrating part of steps of a cell balancing method according to an example embodiment, and FIG. 4 is a flowchart for describing in detail a step S100 of determining a balancing reference value of FIG. 3.

Hereinafter, the cell balancing method and the battery system providing the method will be described with reference to FIGS. 1 to 4.

Referring to FIG. 3, first, the main control circuit 30 determines the balancing reference value that is the start condition for cell balancing (S100).

The balancing reference value may be the start condition (or a reference value) for determining whether the cell balancing is required for each of the plurality of battery cells Cell1-Celln.

Referring to FIGS. 3 and 4, in the step S100, the main control circuit 30 estimates the cell SOC (or the SOC) for each of the plurality of battery cells Cell1-Celln based on at least one of the cell voltage and the battery current every balancing period (S110).

The balancing period may be a predetermined time as a period for performing the cell balancing, but the present disclosure is not limited thereto. The balancing period may include the rest period in which the battery 2 is not charged or discharged. For example, the main control circuit 30 may estimate the cell SOC (hereinafter referred to as Csoc) of each of the plurality of battery cells Cell1-Celln using various known methods for each predetermined balancing period or for each rest period.

In the step S100, the main control circuit 30 extracts the minimum cell SOC min SOC among the SOCs Csoc for the plurality of battery cells Cell1-Celln (S130).

In the step S100, the main control circuit 30 selects the SOC section to which the minimum cell SOC min SOC belongs among the plurality of SOC sections configured by classifying the entire section of the cell SOC according to the predetermined criterion (S150).

In the step S100, the main control circuit 30 determines the section reference value corresponding to the selected SOC section as the balancing reference value (S170).

For example, it is assumed that the battery 2 includes first to fourth battery cells Cell1-Cell4 and first to fourth cell SOCs ($C_{soc\_1}$, $C_{soc\_2}$, $C_{soc\_3}$, and $C_{soc\_4}$) of the first to fourth battery cells Cell1-Cell4 are respectively 26 %, 29 %, 30 %, and 31 %. In addition, in FIG. 2, it is assumed that the section reference value of each of the first SOC section A and the third SOC section C is 1.5 % and the section reference value of the second SOC section B is 3 %. The main control circuit 30 extracts the first cell SOC $C_{soc\_1}$, which is a minimum value among the first to fourth cell SOCs $C_{soc\_1}$, $C_{soc\_2}$, $C_{soc\_3}$, and $C_{soc\_4}$, as the minimum cell SOC min SOC. Referring to FIG. 2, the main control circuit 30 selects the second SOC section B to which a value (26 %) of the first cell SOC $C_{soc\_1}$ belongs among the first to third SOC sections A, B, and C. The main control circuit 30 may determine the section reference value (3 %) corresponding to the second SOC section B as the balancing reference value.

Next, the main control circuit 30 determines a need of the cell balancing for each of the plurality of battery cells Cell1-Celln (S200).

The main control circuit 30 calculates a difference value between the cell SOC of each of the plurality of battery cells Cell1-Celln and the minimum cell SOC min SOC. The main control circuit 30 may determine a battery cell having the difference value exceeding the balancing reference value as the cell balancing target.

For example, when the first to fourth cell SOCs $C_{soc\_1}$, $C_{soc\_2}$, $C_{soc\_3}$, $C_{soc\_4}$ are 26 %, 29 %, 30 %, and 31 %, difference values between the cell SOCs of the plurality of battery cells Cell1-Celln and the minimum cell SOC are 0 %, 3 %, 4 %, and 5 %. The main control circuit 30 may determine the second to fourth battery cells Cell2-Cell4 whose the difference values exceed the balancing reference value (3 %) as cell balancing targets. In this case, the balancing reference value (3 %) is the balancing reference value determined in the step S100.

Next, if the cell balancing is required as a result of the determination (Yes in S200), the main control circuit 30 performs the cell balancing on a battery cell determined as the cell balancing target (S300).

In the step S300, the main control circuit 30 calculates a balancing time $T_B$ based on a cell SOC of the battery cell determined as the cell balancing target, a difference value between the cell SOC of the battery cell and the minimum cell SOC, and a value of a cell voltage of the battery cell.

The balancing time $T_B$ is a time required to perform the cell balancing of the battery cell. The balancing time $T_B$ may be calculated by the following Equation 1 and Equation 2. For example, the main control circuit 30 may calculate a value of a balancing current $I_B$ according to the following Equation 1, and may calculate the balancing time $T_B$ according to the following Equation 2.

[Equation 1]

$$I_B = \frac{V_C}{R_B}$$

According to Equation 1, the main control circuit 30 may calculate a value of the balancing current $I_B$ based on a value of the cell voltage $V_C$ and a value of a balancing resistor $R_B$. Referring to FIG. 1, the cell voltage $V_C$ may correspond to the cell voltage of each of the plurality of battery cells Cell1-Celln, and the balancing resistor $R_B$ may correspond to each of the plurality of resistors R1-Rn. That is, when the values of the cell voltage of each of the plurality of battery cells Cell1-Celln are different each other, the value of the balancing current $I_B$ of each of the plurality of battery cells may also be different.

[Equation 2]

$$T_B = \frac{C_{SOC} \times 100}{I_B} \times D_{SOC}$$

According to Equation 2, the main control circuit 30 may calculate the balancing time $T_B$ based on the value of the cell SOC $C_{soc}$, the value of the balancing current $I_B$, and an SOC reduction amount Dsoc. The cell SOC Csoc may correspond to the cell SOC of each of the plurality of battery cells Cell1-Celln. The value of the balancing current $I_B$ may be the value of the balancing current $I_B$ calculated by the above Equation 1. The SOC reduction amount Dsoc may be the difference value between the cell SOC of each of the plurality of battery cells Cell1-Celln and the minimum cell SOC min SOC. That is, the capacity reduction amount Dsoc may correspond to a SOC value discharged from the battery cell during a cell balancing process.

In the step S300, the main control circuit 30 transmits the cell balancing control signal including information on the balancing time $T_B$ to the cell monitoring IC 20 so that the main control circuit controls the cell monitoring IC to perform the cell balancing on the battery cell determined as the cell balancing target.

For example, when the second to fourth battery cells Cell2-Cell4 are determined as the cell balancing target as discussed above, the main control circuit 30 may calculate the balancing time $T_B$ of each of the second to fourth battery cells. The main control circuit 30 may control the cell monitoring IC 20 to perform the cell balancing according to the balancing time $T_B$ corresponding to each of the second to fourth battery cells Cell2-Cell4.

The cell monitoring IC 20 may discharge the battery cell determined as the cell balancing target among the plurality of battery cells Cell1-Celln through the cell balancing circuit 10 according to the cell balancing control signal transmitted from the main control circuit 30 so that the cell monitoring IC performs the cell balancing.

Next, if the cell balancing is not required as a result of the determination (No in S200) or if the cell balancing is terminated, the main control circuit 30 counts a next balancing period. The main control circuit 30 may repeat the method from the step S100 when the balancing period arrives (S400).

According to an embodiment, the main control circuit 30 may newly determine the balancing reference value whenever whether to perform the cell balancing is determined. For example, the main control circuit 30 may determine the balancing reference value for each predetermined period or for each rest period (for example, a period in which charging and discharging is not performed) of the battery 2, and may determine whether to perform the cell balancing based on the determined balancing reference value.

While this invention has been described in connection with what is presently considered to be practical embodiments, it is to be understood that the invention is not limited to the disclosed embodiments, but, on the contrary, is intended to cover various modifications included within the scope of the appended claims.

## Claims

1. A battery system (1) comprising:

   a battery (2) including a plurality of battery cells (Cell1-Celln);
   a cell monitoring circuit (20) configured to measure a cell voltage of each of the plurality of battery cells;
   a current sensor (12) configured to measure a battery current flowing in the battery; and
   a main control circuit (30) configured to:

   estimate a cell state of charge, SOC, of each of the plurality of battery cells based on the cell voltage and the battery current, extract a minimum cell SOC (min SOC) among cell SOCs of the plurality of battery cells,
   classify an entire section of the cell SOC into a plurality of SOC sections;

   **characterized in that**

   the cell monitoring circuit is an integrated circuit, IC;
   said classification of the entire section of the cell SOC is based on a point at which a ratio of the cell voltage to the cell SOC is changed, and
   said main control circuit (30) is further configured to:

   set a section reference value, which is a start condition of the cell balancing of each of the plurality of SOC sections, based on said ratio, select a SOC section to which the minimum cell SOC (min SOC) belongs among the plurality of SOC sections, and determine the section reference value corresponding to the selected SOC section as a balancing reference value, and determine a need for cell balancing for each of the plurality of battery cells based on the balancing reference value.

2. The battery system (1) of claim 1, wherein the main control circuit (30) is further configured to calculate a difference value between the cell SOC of each of the plurality of battery cells and the minimum cell SOC (min SOC), and to determine that the cell balancing is required for the battery cell, when the difference value exceeds the balancing reference value.

3. The battery system (1) of claim 2, further comprising a cell balancing circuit (10) that includes a plurality of switches (SW1-SWn) and a plurality of resistors (R1-Rn),

   wherein the cell balancing circuit (10) is configured to perform the cell balancing of the battery cell by controlling a switching operation according to a switching signal (SC) among at least one switching signal supplied from the cell monitoring IC (20), and
   wherein the cell monitoring IC (20) is configured to discharge the battery cell determined as a cell balancing target among the plurality of battery cells through the cell balancing circuit (10) according to a cell balancing control signal transmitted from the main control circuit (30).

4. The battery system (1) of claim 3, wherein the main control circuit (30) is further configured to:

   calculate a balancing time based on a cell SOC of the battery cell determined as the cell balancing target,
   calculate a difference value between the cell SOC of the battery cell and the minimum cell SOC (min SOC), and
   calculate a value of a cell voltage of the battery cell, and
   transmit the cell balancing control signal including information on the balancing time to the cell monitoring IC (20).

5. A cell balancing method comprising steps of:

   estimating (S110) a cell SOC of each of the plurality of battery cells based on a cell voltage of each of the plurality of battery cells and a battery current;
   extracting (S130) the minimum cell SOC (min SOC) among the cell SOCs (Csoc) of the plurality of battery cells (Cell1-Celln);
   calculating a difference value between the cell SOC of each of the plurality of battery cells and the minimum cell SOC (min SOC);
   classifying the entire section of the cell SOC into a plurality of SOC sections;
   **characterized in that**
   said classification of the entire section of the cell SOC is based on a point at which a ratio of the cell voltage to the cell SOC (Csoc) is changed; and **in that** the method further comprises steps of:

   setting a section reference value based on the ratio of the cell voltage to the cell SOC (Csoc) corresponding to the plurality of SOC sections; selecting (S150) a SOC section to which the minimum cell SOC (min SOC) belongs among the plurality of SOC sections;
   determining (S170) the section reference value corresponding to the selected SOC section as a balancing reference value, comparing the difference value with the balancing reference value to determine (S200) a need for cell balancing for each of the plurality of battery cells;
performing (S300) the cell balancing on a battery cell determined as a cell balancing target when the cell balancing is required for the battery cell.

6. The cell balancing method of claim 5, wherein the performing (S300) of the cell balancing comprises:

calculating a balancing time ($T_B$) based on a cell SOC of the battery cell determined as the cell balancing target;
calculating a difference value between the cell SOC of the battery cell and the minimum cell SOC (min SOC);
calculating a value of a cell voltage of the battery cell; and
performing the cell balancing of the battery cell during the balancing time ($T_B$).

7. The cell balancing method of claim 5, wherein the determining (S200) of the need for the cell balancing comprises determining the battery cell whose difference value exceeds the balancing reference value as the cell balancing target.

**Patentansprüche**

1. Batteriesystem (1), umfassend:

eine Batterie (2), welche eine Mehrzahl von Batteriezellen (Cell1-Celln) umfasst;
eine Zellenüberwachungsschaltung (20), welche dazu eingerichtet ist, eine Zellenspannung jeder der Mehrzahl von Batteriezellen zu messen;
einen Stromsensor (12), welcher dazu eingerichtet ist, einen Batteriestrom zu messen, welcher in der Batterie fließt; und
eine Hauptsteuerungsschaltung (30), welche eingerichtet ist, zum:

Schätzen eines Zellen-Ladezustands, SOC, jeder der Mehrzahl von Batteriezellen auf Grundlage der Zellenspannung und des Batteriestroms,
Extrahieren eines minimalen Zellen-SOC (min SOC) unter den Zellen-SOC der Mehrzahl von Batteriezellen,
Klassifizieren eines gesamten Bereichs der Zellen-SOC in eine Mehrzahl von SOC-Bereichen;
**dadurch gekennzeichnet, dass** die Zellenüberwachungsschaltung eine integrierte Schaltung, IC, ist;
die Klassifizierung des gesamten Bereichs der Zellen-SOC auf einem Punkt basiert, an welchem sich ein Verhältnis der Zellenspannung zu dem Zellen-SOC ändert, und die Hauptsteuerungsschaltung (30) ferner eingerichtet ist, zum:

Festlegen eines Bereichsreferenzwertes, welcher eine Startbedingung des Zellenausgleichs jeder der Mehrzahl von SOC-Bereichen, auf Grundlage des Verhältnisses,
Auswählen eines SOC-Bereichs, zu welchem der minimale Zellen-SOC (min SOC) unter der Mehrzahl von SOC-Bereichen gehört, und
Bestimmen des Bereichsreferenzwertes, welcher dem ausgewählten SOC-Bereich entspricht, als einen Ausgleichsreferenzwert, und Bestimmen eines Bedarfs eines Zellenausgleichs für jede der Mehrzahl von Batteriezellen auf Grundlage des Ausgleichsreferenzwertes.

2. Batteriesystem (1) nach Anspruch 1, wobei die Hauptsteuerungsschaltung (30) ferner dazu eingerichtet ist, einen Differenzwert zwischen dem Zellen-SOC jeder der Mehrzahl von Batteriezellen und dem minimalen Zellen-SOC (min SOC) zu berechnen und zu bestimmen, dass das Zellenausgleichen für die Batteriezelle notwendig ist, wenn der Differenzwert den Ausgleichsreferenzwert überschreitet.

3. Batteriesystem (1) nach Anspruch 2, ferner umfassend eine Zellenausgleichsschaltung (10), welche eine Mehrzahl von Schaltern (SW1-SWn) und eine Mehrzahl von Widerständen (R1-Rn) umfasst,

wobei die Zellenausgleichsschaltung (10) dazu eingerichtet ist, das Zellenausgleichen der Batteriezelle durch ein Steuern einer Schaltbetätigung gemäß einem Schaltsignal (SC) unter wenigstens einem Schaltsignal durchzuführen, welches von der Zellenüberwachung-IC (20) übermittelt ist, und
wobei die Zellenüberwachung-IC (20) dazu eingerichtet ist, die Batteriezelle zu entladen, welche als ein Zellenausgleichsziel bestimmt ist, unter der Mehrzahl von Batteriezellen, durch die Zellenausgleichsschaltung (10) gemäß einem Zellenausgleichssignal, welches von der Hauptsteuerungsschaltung (30) übertragen wird.

4. Batteriesystem (1) nach Anspruch 3, wobei die Hauptsteuerungsschaltung (30) ferner eingerichtet ist, zum:

Berechnen einer Ausgleichszeit auf Grundlage eines Zellen-SOC der Batteriezelle, welche als das Zellenausgleichsziel bestimmt ist,
Berechnen eines Differenzwertes zwischen dem Zellen-SOC der Batteriezelle und dem minimalen Zellen-SOC (min SOC), und
Berechnen eines Wertes einer Zellenspannung der Batteriezelle, und
Übertragen des Zellenausgleichssteuerungssignals, welches Informationen zu der Ausgleichszeit umfasst, auf die Zellenüberwachung-IC (20).

5. Zellenausgleichsverfahren, umfassend Schritte, aus:

Schätzen (S110) eines Zellen-SOC jeder der Mehrzahl von Batteriezellen auf Grundlage einer Zellenspannung jeder der Mehrzahl von Batteriezellen und eines Batteriestroms;
Extrahieren (S130) des minimalen Zellen-SOC (min SOC) unter den Zellen-SOC (Csoc) der Mehrzahl von Batteriezellen (Cell1-Celln);
Berechnen eines Differenzwertes zwischen dem Zellen-SOC jeder der Mehrzahl von Batteriezellen und dem minimalen Zellen-SOC (min SOC);
Klassifizieren des gesamten Bereichs der Zellen-SOC in eine Mehrzahl von SOC-Bereichen; **dadurch gekennzeichnet, dass**
die Klassifizierung des gesamten Bereichs der Zellen-SOC auf einem Punkt basiert, an welchem sich ein Verhältnis der Zellenspannung zu dem Zellen-SOC (Csoc) ändert; und dass das Verfahren ferner Schritte umfasst, aus:

Festlegen eines Bereichsreferenzwertes auf Grundlage des Verhältnisses der Zellenspannung zu dem Zellen-SOC (Csoc), welcher der Mehrzahl von SOC-Bereichen entspricht;
Auswählen (S150) eines SOC-Bereichs, zu welchem der minimale Zellen-SOC (min SOC) unter der Mehrzahl von SOC-Bereichen gehört;
Bestimmen (S170) des Bereichsreferenzwertes, welcher dem ausgewählten SOC-Bereich entspricht, als ein Ausgleichsreferenzwert,
Vergleichen des Differenzwertes mit dem Ausgleichsreferenzwert, um einen Bedarf eines Zellenausgleichs für jede der Mehrzahl von Batteriezellen zu bestimmen (S200);
Durchführen (S300) des Zellenausgleichens an einer Batteriezelle, welche als ein Zellenausgleichsziel bestimmt wird, wenn das Zellenausgleichen für die Batteriezelle notwendig ist.

6. Zellenausgleichsverfahren nach Anspruch 5, wobei das Durchführen (S300) des Zellenausgleichens umfasst:

Berechnen einer Ausgleichszeit ($T_B$) auf Grundlage eines Zellen-SOC der Batteriezelle, welche als das Zellenausgleichsziel bestimmt wird;
Berechnen eines Differenzwertes zwischen dem Zellen-SOC der Batteriezelle und dem minimalen Zellen-SOC (min SOC);
Berechnen eines Wertes einer Zellenspannung der Batteriezelle; und
Durchführen des Zellenausgleichens der Batteriezelle während der Ausgleichszeit ($T_B$).

7. Zellenausgleichsverfahren nach Anspruch 5, wobei das Bestimmen (S200) des Bedarfs für das Zellenausgleichen ein Bestimmen der Batteriezelle, deren Differenzwert den Ausgleichsreferenzwert überschreitet, als das Zellenausgleichsziel umfasst.

**Revendications**

1. Système de batterie (1) comprenant :

une batterie (2) comprenant une pluralité d'éléments de batterie (Cell1-Celln) ;
un circuit de surveillance d'éléments (20) configuré pour mesurer une tension d'élément de chacun de la pluralité d'éléments de batterie ;
un capteur de courant (12) configuré pour mesurer un courant de batterie circulant dans la batterie ; et
un circuit principal de commande (30) configuré pour :

estimer un état de charge, SOC, d'élément de chacun de la pluralité d'éléments de batterie sur la base de la tension d'élément et du courant de batterie,
extraire un SOC minimum d'élément (SOC min) parmi les SOC d'éléments de la pluralité d'éléments de batterie,
classer une section entière du SOC d'élément en une pluralité de sections de SOC ;
**caractérisé en ce que**
le circuit de surveillance d'élément est un circuit intégré, IC ;
ladite classification de la section entière du SOC d'élément est basée sur un point où un rapport de la tension d'élément sur le SOC d'élément est modifié, et

le circuit principal de commande (30) est en outre configuré pour :

définir une valeur de référence de section, qui est une condition de départ de l'équilibrage d'élément de chacune de la pluralité de sections de SOC, sur la base dudit rapport, sélectionner une section de SOC à laquelle appartient le SOC minimum d'élément (SOC min) parmi la pluralité de sections de SOC, et

déterminer la valeur de référence de section correspondant à la section de SOC sélectionnée en tant que valeur de référence d'équilibrage, et déterminer un besoin d'équilibrage d'élément pour chacun de la pluralité d'éléments de batterie sur la base de la valeur de référence d'équilibrage.

2. Système de batterie (1) selon la revendication 1, dans lequel le circuit principal de commande (30) est en outre configuré pour calculer une valeur de différence entre le SOC d'élément de chacun de la pluralité d'éléments de batterie et le SOC minimum d'élément (SOC min), et pour déterminer que l'équilibrage d'élément est nécessaire pour l'élément de batterie, lorsque la valeur de différence dépasse la valeur de référence d'équilibrage.

3. Système de batterie (1) selon la revendication 2, comprenant en outre un circuit d'équilibrage d'élément (10) qui comprend une pluralité de commutateurs (SW1-SWn) et une pluralité de résistances (R1-Rn),

dans lequel le circuit d'équilibrage d'élément (10) est configuré pour effectuer l'équilibrage d'élément de l'élément de batterie en commandant une opération de commutation en fonction d'un signal de commutation (SC) parmi au moins un signal de commutation fourni par le IC de surveillance d'élément (20), et

dans lequel le IC de surveillance d'élément (20) est configuré pour décharger l'élément de batterie déterminé comme étant une cible d'équilibrage d'élément parmi la pluralité d'éléments de batterie par l'intermédiaire du circuit d'équilibrage d'élément (10) en fonction d'un signal de commande d'équilibrage d'élément transmis à partir du circuit principal de commande (30).

4. Système de batterie (1) selon la revendication 3, dans lequel le circuit principal de commande (30) est en outre configuré pour :

calculer un temps d'équilibrage sur la base d'un SOC d'élément de l'élément de batterie déterminé comme étant la cible d'équilibrage d'élément,

calculer une valeur de différence entre le SOC d'élément de l'élément de batterie et le SOC minimum d'élément (SOC min), et

calculer une valeur d'une tension d'élément de l'élément de batterie, et

transmettre le signal de commande d'équilibrage d'élément comprenant des informations sur le temps d'équilibrage au IC de surveillance d'élément (20).

5. Procédé d'équilibrage d'élément comprenant les étapes suivantes :

l'estimation (S110) d'un SOC d'élément de chacun de la pluralité d'éléments de batterie sur la base d'une tension d'élément de chacun de la pluralité d'éléments de batterie et d'un courant de batterie ;

l'extraction (S130) du SOC minimum d'élément (SOC min) parmi les SOC d'élément (Csoc) de la pluralité d'éléments de batterie (Cell1-Celln) ;

le calcul d'une valeur de différence entre le SOC d'élément de chacun de la pluralité d'éléments de batterie et le SOC minimum d'élément (SOC min) ;

la classification de la section entière du SOC d'élément en une pluralité de sections de SOC ;

**caractérisé en ce que**

ladite classification de la section entière du SOC d'élément est basée sur un point où un rapport de la tension d'élément sur le SOC d'élément (Csoc) est modifié ;

et **en ce que** le procédé comprend en outre les étapes suivantes :

la définition d'une valeur de référence de section sur la base du rapport de la tension d'élément sur le SOC d'élément (Csoc) correspondant à la pluralité de sections de SOC ;

la sélection (S150) d'une section de SOC à laquelle appartient le SOC minimum d'élément (SOC min) parmi la pluralité de sections de SOC ;

la détermination (S170) de la valeur de référence de section correspondant à la section de SOC sélectionnée comme étant une valeur de référence d'équilibrage, la comparaison de la valeur de différence à la valeur de référence d'équilibrage pour la détermination (S200) d'un besoin d'équilibrage d'élément pour chacun de la pluralité d'éléments de batterie ;

la réalisation (S300) de l'équilibrage d'élément sur un élément de batterie déterminé comme étant une cible d'équilibrage d'élément lorsque l'équilibrage d'élément est nécessaire pour l'élément de batterie.

6. Procédé d'équilibrage d'élément selon la revendication 5, dans lequel la réalisation (S300) de l'équilibrage d'élément comprend :

le calcul d'un temps d'équilibrage ($T_B$) sur la base d'un SOC d'élément de l'élément de batterie déterminé comme étant la cible d'équilibrage d'élément ;
le calcul d'une valeur de différence entre le SOC d'élément de l'élément de batterie et le SOC minimum d'élément (SOC min) ;
le calcul d'une valeur d'une tension d'élément de l'élément de batterie ; et
la réalisation de l'équilibrage d'élément de l'élément de batterie pendant le temps d'équilibrage ($T_B$).

7. Procédé d'équilibrage d'élément selon la revendication 5, dans lequel la détermination (S200) du besoin de l'équilibrage d'élément comprend la détermination de l'élément de batterie dont la valeur de différence dépasse la valeur de référence d'équilibrage comme étant la cible d'équilibrage d'élément.

FIG. 1

FIG. 2

FIG. 3

S100 — | Determine balancing reference value | ◄────────────┐

S200

Is cell
balancing necessary?  — No ──►  | Arrival of balancing period | — S400

Yes

S300 — | Perform cell balancing | ──────►

FIG. 4

| | |
|---|---|
| Estimate SOC of each of battery cells | ∼S110 |

↓

| | |
|---|---|
| Extract minimum SOC among SOCs of battery cells | ∼S130 |

↓

| | |
|---|---|
| Select SOC section to which minimum SOC belongs among SOC sections | ∼S150 |

↓

| | |
|---|---|
| Determine section reference value corresponding to selected SOC section as balancing reference value | ∼S170 |

**EP 4 379 996 B1**

**Patent documents cited in the description**

- KR 1020210171884
- WO 2019042410 A1